# EUROPÄISCHE PATENTANMELDUNG

(11) **EP 1 528 523 A2**
(43) Veröffentlichungstag der Anmeldung: **04.05.2005**
(21) Anmeldenummer: 04025583.8
(22) Anmeldetag: 27.10.2004
(51) Int. Cl.: G08C 19/00

(54) **Verfahren zur Datensicherung von Betriebsdaten von elektrischen Geräten und Rechnerstation**

(30) Priorität: 31.10.2003 DE 10351316
(71) Anmelder: SIEMENS AKTIENGESELLSCHAFT, 80333 München (DE)
(72) Erfinder: Burger, Roland, 88317 Aichstetten (DE); Czech, Silvan, 91058 Erlangen (DE)

(57) **Zusammenfassung**

Die Erfindung betrifft ein Verfahren zur Datensicherung von Betriebsdaten (DAT1-DAT3) von räumlich verteilt betriebenen elektrischen Geräten (G1-G3), welche zyklisch von an den Geräten angeschlossenen Datenloggern (LOG1-LOG3) mit je einer vorgebbaren Gesamtaufzeichnungsdauer (AD1-AD3) erfasst werden, wobei die Datenlogger zentral von einer Rechnerstation (PC) über eine Datenverbindung (DV) erreicht werden können. Erfindungsgemäß wird in der Rechnerstation die jeweilige noch verfügbare Aufzeichnungsdauer (VZ1'-VZ3') zyklisch ermittelt, und dann eine Datenkommunikation zu dem elektrischen Gerät zum Herunterladen der Betriebsdaten aufgebaut, bevor die noch verfügbare Aufzeichnungsdauer des betreffenden Datenloggers verstrichen ist. Die Erfindung betrifft eine Rechnerstation mit programmtechnischen Mitteln (PG) zur Durchführung des Verfahrens. Das Verfahren bietet den großen Vorteil, dass automatisiert und zuverlässig die Betriebsdaten der jeweiligen Datenlogger ohne Mitwirkung eines Benutzers ausgelesen werden können. In einer vorteilhaften Verfahrensvariante werden die erfassten Betriebsdaten automatisiert mit Sollwertsbereichen (δ1-δ3) verglichen und ggf. eine Fehlermeldung (FM) an den Benutzer abgesetzt.

## Beschreibung

Die Erfindung betrifft ein Verfahren zur Datensicherung von Betriebsdaten von räumlich verteilt betriebenen elektrischen Geräten, welche zyklisch von an den Geräten angeschlossenen Datenloggern mit je einer vorgebbaren Gesamtaufzeichnungsdauer erfasst werden, wobei die Datenlogger zentral von einer Rechnerstation über eine Datenverbindung erreicht werden können. Die Erfindung betrifft eine Rechnerstation mit programmtechnischen Mitteln zur Durchführung des Verfahrens.

Elektrische Geräte werden in zunehmenden Maße mit Diagnosefunktionen ausgestattet, um eine Diagnose auch über weite Entfernungen hinweg zu ermöglichen. So können z.B. geräteinterne Fehler in einem Fehlerspeicher des elektrischen Geräts abgespeichert werden. Dieser Fehlerspeicher kann dann z.B. von einem Serviceingenieur über eine Datenverbindung, wie z.B. über ein Funkmodem, von seiner Rechnerstation ausgelesen werden. Die Rechnerstation kann z.B. ein Desktop-PC, ein Notebook, ein Palmtop sein. Im Fehlerfall kann dann Servicepersonal vor Ort beordert werden, diesen Fehler zu beseitigen.

Um qualitativ höhere Diagnoseergebnisse erzielen zu können, ist es bekannt, ein elektrisches Gerät an einen Datenlogger anzuschließen, um geräteinterne Signale, wie z.B. Strom- und Spannungssignale oder digitale Ein-/Ausgabesignale des Geräts zu erfassen. Es können auch z.B. über zusätzliche an den Datenlogger angeschlossene Sensoren physikalische Umgebungsdaten, wie z.B. die Temperatur im Gerät, die Umgebungstemperatur des Geräts oder auch die Luftfeuchtigkeit, erfasst werden. Die zuvor genannten Daten können als Betriebsdaten eines jeweiligen elektrischen Geräts betrachtet werden. Der Datenlogger ist typischerweise so ausgebildet, dass er über eine Vielzahl von analogen und digitalen Signaleingängen verfügt.

Er kann zusätzliche Eingänge zum Anschluss von Temperatursensoren, wie z.B. von PT 100-Sensoren, aufweisen.

Datenlogger weisen zudem einen nichtflüchtigen elektronischen Datenspeicher oder einen Festplattenspeicher auf, um die zyklisch erfassten Betriebsdaten dort abzulegen. Es können für verschiedene Signaleingänge unterschiedliche, sog. Abtastfrequenzen, festgelegt werden, die notwendig sind, um ein betreffendes Betriebsdatum ordnungsgemäß zu erfassen. So kann es z.B. für einen Temperatureingang ausreichend sein, die Umgebungstemperatur des Geräts im Minutentakt zu erfassen. Zu erfassende elektrische Spannungen am Ausgang einer Spannungsversorgung als Beispiel für ein elektrisches Gerät sind dagegen z.B. im Millisekundenbereich zu erfassen, um eventuelle kurzzeitige Spannungseinbrüche erfassen und dokumentieren zu können.

Zur zeitlichen Dokumentation weist ein Datenlogger eine interne elektronische Uhr als Zeitbasis auf, um nachträglich den zeitlichen Bezug eines erfassten Betriebsdatum wieder herleiten zu können. Eine einfache bekannte Möglichkeit ist es z.B., jedem erfassten Betriebsdatum einen sog. "Zeitstempel" datentechnisch anzuhängen.

Nach Festlegung aller Abtastfrequenzen und der Anzahl der zu erfassenden Eingangsgrößen ist somit die für diese Konfiguration resultierende Gesamtaufzeichnungsdauer des Datenloggers rechnerisch ermittelbar. Gängige Praxis ist es dabei, die zu erst erfassten und abgespeicherten Daten dann wieder zu überschreiben, wenn das Speichermedium voll ist. Die Gesamtaufzeichnungsdauer kann z.B. einige Stunden, etliche Tage oder Monate betragen. Maßgeblich für die Maximalaufzeichnungsdauer ist die Aufzeichnungsfrequenz und die Speicherkapazität des Datenloggers.

Mittels eines Datenloggers lassen sich nicht nur der aktuelle Status sowie aktuelle Betriebsdaten eines elektrischen Geräts erfassen, sondern auch ihre "Historie" erfassen. So kann im Nachhinein durch Auswerten der gesamten Betriebsdaten die Ursache eines Fehlers sowie Folgefehler ermittelt werden. Auch ist es möglich, externe Einwirkungen auf das elektrische Gerät und dessen Reaktion zu bewerten, wie z.B. im Falle der Zunahme der Umgebungstemperatur über einen maximal zulässigen Wert. Die Folge davon könnte z.B. eine Leistungsreduktion eines Stromversorgungsgeräts am Ausgang sein.

Die o.g. erfassten Betriebsdaten sind somit für den Serviceingenieur wie auch für einen Entwicklungsingenieur eines o.g. elektrischen Geräts von hohem Wert, um frühzeitig eventuelle technische Mängel eines Geräts zu erkennen. Auch kann z.B. der Nachweis gegenüber einem Kunden geführt werden, dass eventuell auftretende Fehler eines Geräts nicht vom elektrischen Gerät selbst verursacht worden sind, sondern vom Einbauort des Kunden herrühren, wenn dort z.B. eine geforderte ausreichende Belüftung des elektrischen Geräts nicht gegeben sein sollte.

Bei einem sog. Herunterladen der Betriebsdaten aus dem Speicher eines Datenloggers eines elektrischen Geräts kann es vorkommen, dass ein Serviceingenieur vergisst, zur rechten Zeit die Betriebsdaten aus dem Datenlogger auszulesen. Damit gehen nachteilig wertvolle Daten verloren, so dass u.U. ein vorliegender Fehler im elektrischen Gerät nicht mehr rekonstruiert werden kann.

Das Problem verschärft sich mit der zunehmenden Anzahl von elektrischen Geräten, welche im Feldeinsatz betrieben werden und deren Datenlogger zu unterschiedlichen Zeitpunkten ausgelesen werden müssen, um keine Daten zu verlieren.

Es ist daher die Aufgabe der Erfindung, ein Verfahren anzugeben, bei welchem ein Datenverlust der von einer Mehrzahl von Datenloggern stammenden Betriebsdaten vermieden wird.

Die Aufgabe der Erfindung wird gelöst mit einem Verfahren zur Datensicherung von Betriebsdaten von räumlich verteilt betriebenen elektrischen Geräten mit den Merkmalen des Anspruchs 1. Anspruch 9 betrifft eine Rechnerstation zur Durchführung des Verfahrens.

Erfindungsgemäß wird in der Rechnerstation die jeweilige noch verfügbare Aufzeichnungsdauer zyklisch ermittelt, und dann eine Datenkommunikation zu dem elektrischen Gerät zum Herunterladen der Betriebsdaten aufgebaut, bevor die noch verfügbare Aufzeichnungsdauer des betreffenden Datenloggers verstrichen ist.

Dazu werden in der Rechnerstation sämtliche Gesamtaufzeichnungsdauern sowie die jeweilige zu einem Zeitpunkt verfügbare Aufzeichnungsdauer eines Datenloggers als Konfigurationsdatensatz hinterlegt. Dies erfolgt zweckmäßigerweise im Rahmen der Initialisierung der jeweiligen Datenlogger. Da die Rechnerstation und die Datenlogger über je eine Zeitbasis verfügen, kann fortlaufend nun in der Rechnerstation die aktuelle verfügbare Aufzeichnungsdauer des jeweiligen Datenloggers nachgebildet werden. Der Konfigurationsdatensatz kann zusätzlich für jeden Datenlogger die Verbindungsdaten zum automatisierten Verbindungsaufbau aufweisen. Dies kann z.B. eine Telefonnummer oder ein IP-Adresse des elektrischen Geräts bei einem Datenzugriff über ein Datennetzwerk, wie z.B. über ein LAN, erfolgen.

Das erfindungsgemäße Verfahren bietet den großen Vorteil, dass automatisiert und zuverlässig die Betriebsdaten der jeweiligen Datenlogger ausgelesen werden, bevor diese wieder vom Datenlogger selbst überschrieben werden.

Ein weiterer Vorteil ist, dass die Datenverbindung zu den jeweiligen Datenloggern ohne Initiierung durch den Benutzer der Rechnerstation erfolgen kann. Der gesamte Prozess kann somit z.B. als Softwareroutine in der Rechnerstation im Hintergrund erfolgen, ohne dass der Benutzer davon Kenntnis nimmt. Es kann vorteilhaft nur dann eine Meldung an den Benutzer erfolgen, wenn ein Fehler- oder Störungsfall vorliegt.

In einer Verfahrensvariante erfolgt die Datenkommunikation zu den jeweiligen Datenloggern mit einer vorgegebenen Vorlaufzeit. Dadurch kann vorteilhaft ein eventueller Verlust von herunterzuladenden Betriebsdaten vermieden werden, falls eine Datenkommunikation aufgrund technischer Störungen, wie z.B. ein überlastetes Telefonnetz, nicht gleich möglich sein sollte. Die Vorlaufzeit kann z.B. zeitlich einem Zehntel der Gesamtaufzeichnungsdauer entsprechen.

Wie eingangs genannt, können die erfassten Betriebsdaten interne elektrische Signale und/oder physikalische Umgebungsdaten der elektrischen Geräte wie Temperatur, Luftfeuchtigkeit etc. sein, welche technisch Einfluss auf das elektrische Gerät haben könnten.

Gemäß einer weiteren Verfahrensvariante wird nach Herunterladen der Betriebsdaten aus dem Datenlogger die jeweilige verfügbare Aufzeichnungsdauer auf den Wert der jeweiligen Gesamtaufzeichnungsdauer gesetzt wird. Dadurch wird der Speicher des Datenloggers nach vollständiger Sicherung der Betriebsdaten im Massenspeicher der Rechnerstation zurückgesetzt, so dass dieser wieder seine maximale Aufzeichnungsdauer aufweist. Der Datenlogger kann somit unmittelbar nach Datensicherung mit der Aufzeichnung der Betriebsdaten fortfahren. Der Datenlogger kann auch derart ausgebildet sein, dass er eine Aufzeichnung der Betriebsdaten während der Datenübertragung gestattet.

In einer besonders vorteilhaften Verfahrensvariante werden die heruntergeladenen Betriebsdaten eines elektrischen Geräts mit vorgebbaren betrieblichen Sollwertbereichen für die jeweiligen Betriebsdaten des betreffenden Geräts verglichen. Es kann dann bei Überschreiten eines Sollwertbereichs eine Warnmeldung an den Benutzer der Rechnerstation ausgegeben werden. Die jeweiligen Sollwertbereiche können in dem o.g. Konfigurationsdatensatz in der Rechnerstation zur Auswertung hinterlegt werden.

Der große Vorteil dabei ist, dass automatisiert eine datentechnische Bewertung der Betriebsdaten vorgenommen werden kann. Überschreitet beispielweise ein erfasstes Betriebsdatum im erfassten Zeitraum das Toleranzband eines zum Betriebsdatum zugehörigen Sollwertbereichs, so kann vorteilhaft eine Warnmeldung an den Benutzer abgegeben werden. Durch die automatisierte Bewertung ergibt sich für den Benutzer, wie z.B. den Serviceingenieur, ein erheblicher Zeitvorteil.

In einer weiteren besonderen Ausführungsform werden Durchschnittswerte aus je einem heruntergeladenen Betriebsdatum von gleichartigen, insbesondere identischen, elektrischen Geräten gebildet. Weicht dann zumindest ein Betriebsdatum eines elektrischen Geräts von dem betreffenden Durchschnittswert signifikant ab, so wird eine weitere Warnmeldung an den Benutzer ausgegeben. Auch hier wird der Serviceingenieur durch die automatisierte Bewertung zeitlich erheblich entlastet.

Ein weiterer Vorteil ist, dass hier nur ein Konfigurationsdatensatz stellvertretend für alle identischen elektrischen Geräte mit identischer Konfiguration der angeschlossenen Datenlogger notwendig ist.

Die Datenverbindung zu den Datenloggern kann, wie eingangs bereits beschrieben, über eine Telefonverbindung, eine Internetverbindung, eine LAN-Verbindung oder über eine Funkmodem-Verbindung z.B. auf Basis des GSM- oder UMTS-Standards erfolgen.

In vorteilhafter Weise kann der Datenlogger in das elektrische Gerät integriert sein. Aufgrund des hohen Integrationsgrads elektronischer Speicher und elektronischer Schaltkreise an sich ist es auch möglich, den Datenlogger als integriertes elektronisches Bauteil oder als Steckmodul im elektrischen Gerät unterzubringen.

Erfindungsgemäß kann das o.g. Verfahren mit programmtechnischen Mitteln der Rechnerstation, wie z.B. mittels Softwareroutinen, bewerkstelligt werden. Dazu weist die Rechnerstation einen Anschluss an ein Datenübertragungsnetz zur Datenverbindung mit einer Mehrzahl von den o.g. Datenloggern auf. Die datentechnische Sicherung der Betriebsdaten kann in einem Massenspeicher der Rechnerstation oder z.B. in einem datentechnisch mit der Rechnerstation in Verbindung stehendem Server erfolgen. Zur Verbindung mit dem Datennetz kann die Rechnerstation eine genormte Schnittstelle, wie z.B. eine LAN-, RS232- oder eine Modem-Schnittstelle aufweisen.

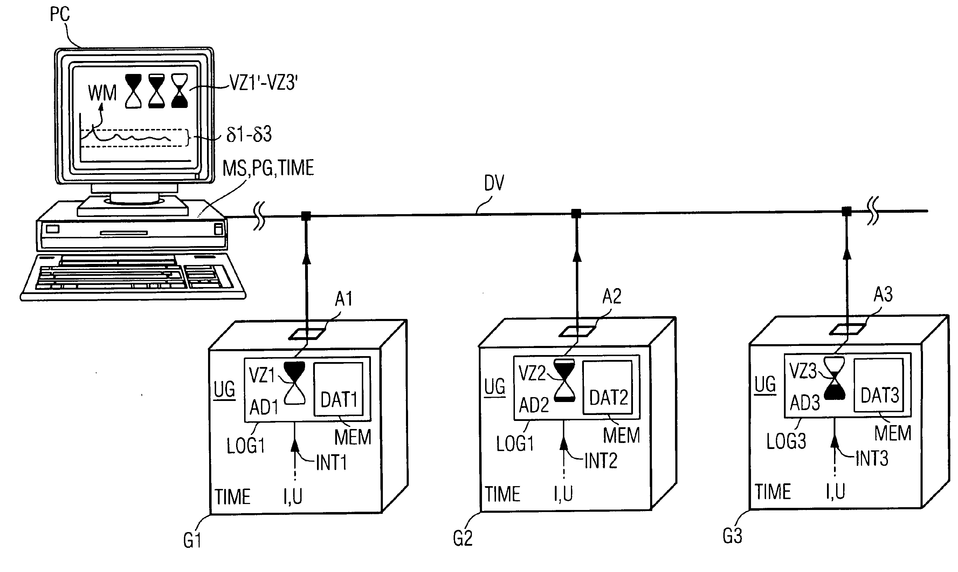

Die Erfindung wird an Hand der einzigen Figur näher erläutert:

Dabei zeigt die Figur im linken oberen Bereich eine beispielhafte Rechnerstation PC, welche über eine Datenverbindung DV in Form eines Netzwerks mit beispielhaft drei Datenloggern LOG1-LOG3 verbunden ist. Die Datenlogger LOG1-LOG3 sind hier bereits in die dargestellten beispielhaften elektrischen Geräte G1-G3 integriert. Zum Anschluss des Datennetzes weisen die elektrischen Geräte G1-G3 bzw. die Datenlogger LOG1-LOG3 eine Anschlussmöglichkeit A1-A3 auf.

Die Datenlogger LOG1-LOG3 weisen einen nichtflüchtigen Speicher MEM zur Ablage der erfassten Betriebsdaten DAT1-DAT3 auf. Über geräteinterne Signalleitungen INT1-INT3 werden dabei Strom- und Spannungssignale I,U beispielhaft erfasst. Des Weiteren werden Umgebungsdaten UG durch die Datenlogger LOG1-LOG3 erfasst. Das entsprechende Bezugszeichen UG ist dabei neben dem Datenlogger LOG1-LOG3 eingetragen, um beispielhaft eine zu messende Temperatur im Inneren des elektrischen Geräts G1-G3 anzuzeigen. Mit AD1-AD3 ist die für den jeweiligen Datenlogger LOG1-LOG3 spezifische Gesamtaufzeichnungsdauer bezeichnet. Die eingetragene Sanduhr symbolisiert die noch verfügbare Aufzeichnungsdauer VZ1-VZ3 des jeweiligen Datenloggers LOG1-LOG3. Dazu verfügt der Datenlogger LOG1-LOG3 über eine Zeitbasis TIME. Für das vorliegende Beispiel bedeutet dies, dass der Datenspeicher MEM des Datenloggers LOG3 von Gerät G3 nahezu voll ist, und die korrespondierende verfügbare Aufzeichnungsdauer VZ3 nahezu verstrichen ist.

Die beispielhafte Rechnerstation PC verfügt über einen Massenspeicher MS zur Ablage der heruntergeladenen Betriebsdaten DAT1-DAT3 sowie über eine Zeitbasis TIME. Eine Software-Applikation bzw. Softwareroutinen kennzeichnet das Bezugszeichen PG. In physikalischer Hinsicht werden diese Softwareroutinen PG von einem Mikroprozessor ausgeführt, welcher sich üblicherweise im Inneren der Rechnerstation PC befindet.

Auf dem Bildschirm der Rechnerstation PC sind die rechnerisch nachgebildeten verfügbaren Aufzeichnungszeiten VZ1'-VZ3' dargestellt, welche mit denen VZ1-VZ3 in den elektrischen Geräten G1-G3 korrespondieren. Diese zeigen an, wann das nächste Herunterladen von Betriebsdaten DAT1-DAT3 ansteht.

Schließlich ist ein beispielhafter Graph eines beispielhaften Betriebsdatums DAT1-DAT3, wie z.B. eines Spannungsverlaufs, dargestellt. Dabei überschreitet dieser einen vorgegebenen Sollwertbereich δ1-δ3. Dieses Ereignis wird von den programmtechnischen Mitteln PG bei einer Auswertung der heruntergeladenen Betriebsdaten DAT1-DAT3 erkannt und eine entsprechende Warnmeldung WM beispielhaft auf den Bildschirm ausgegeben.

## Patentansprüche

1. Verfahren zur Datensicherung von Betriebsdaten (DAT1-DAT3) von räumlich verteilt betriebenen elektrischen Geräten (G1-G3), welche zyklisch von an den Geräten (G1-G3) angeschlossenen Datenloggern (LOG1-LOG3) mit je einer vorgebbaren Gesamtaufzeichnungsdauer (AD1-AD3) erfasst werden, wobei die Datenlogger (LOG1-LOG3) zentral von einer Rechnerstation (PC) über eine Datenverbindung (DV) erreicht werden können, wobei
a) in der Rechnerstation (PC) die jeweilige noch verfügbare Aufzeichnungsdauer (VZ1'-VZ3') zyklisch ermittelt wird, und dann
b) eine Datenkommunikation zu dem elektrischen Gerät (G1-G3) zum Herunterladen der Betriebsdaten (DAT1-DAT3) aufgebaut wird, bevor die noch verfügbare Aufzeichnungsdauer (VZ1'-VZ3') des betreffenden Datenloggers (LOG1-LOG3) verstrichen ist.

2. Verfahren nach Anspruch 1, wobei die Datenkommunikation zu den Datenloggern (LOG1-LOG3) mit einer vorgegebenen Vorlaufzeit erfolgt.

3. Verfahren nach Anspruch 1 oder 2, wobei die erfassten Betriebsdaten (DAT1-DAT3) interne elektrische Signale (I,U) und/oder physikalische Umgebungsdaten (UG) der elektrischen Geräte (G1-G3) wie Temperatur, Luftfeuchtigkeit etc. sind.

4. Verfahren nach einem der vorangegangenen Ansprüche, wobei nach Herunterladen der Betriebsdaten (DAT1-DAT3) aus dem Datenlogger (LOG1-LOG3) die jeweilige verfügbare Aufzeichnungsdauer (VZ1-VZ3) auf den Wert der jeweiligen Gesamtaufzeichnungsdauer (AD1-AD3) gesetzt wird.

5. Verfahren nach einem der vorangegangenen Ansprüche, wobei die heruntergeladenen Betriebsdaten (DAT1-DAT3) eines elektrischen Geräts (G1-G3) mit vorgebbaren betrieblichen Sollwertbereichen (δ1-δ3) für die jeweiligen Betriebsdaten (DAT1-DAT3) des betreffenden Geräts (G1-G3) verglichen werden, und wobei bei Überschreiten eines Sollwertbereichs (δ1-δ3) eine Warnmeldung (WM) ausgegeben wird.

6. Verfahren nach einem der vorangegangenen Ansprüche, wobei Durchschnittswerte aus je einem heruntergeladenen Betriebsdatum (DAT1-DAT3) gleichartiger elektrischer Geräte (G1-G3) gebildet werden, und wobei dann eine weitere Warnmeldung ausgegeben wird, falls zumindest ein Betriebsdatum (DAT1-DAT3) eines elektrischen Geräts (G1-G3) von dem betreffenden Durchschnittswert abweicht.

7. Verfahren nach einem der vorangegangenen Ansprüche, wobei die Datenverbindung (DV) zu den Datenloggern (LOG1-LOG3) über eine Telefonverbindung, eine Internetverbindung, eine LAN-Verbindung oder über eine Funk-Verbindung erfolgt.

8. Verfahren nach einem der vorangegangenen Ansprüche, wobei der Datenlogger (LOG1-LOG3) in das elektrische Gerät (G1-G3) integriert wird.

9. Rechnerstation (PC) mit einer Schnittstelle zur Datenverbindung (DV) mit einer Mehrzahl von Datenloggern (LOG1-LOG3), welche je an ein elektrisches Gerät (G1-G3) zur Erfassung von Betriebsdaten (DAT1 -DAT3) des elektrischen Geräts (G1-G3) angeschlossen sind, und mit programmtechnischen Mitteln (PG) zur Durchführung des Verfahrens nach einem der vorangegangenen Ansprüche.
